# EUROPEAN PATENT SPECIFICATION

(11) **EP 1 649 186 B1**
(45) Date of publication and mention of the grant of the patent: **22.01.2020**
(21) Application number: 03817752.3
(22) Date of filing: 31.07.2003
(51) Int. Cl.: F16D 65/18, B60T 13/74

(54) **METHOD AND APPARATUS FOR CONTROLLING A BRAKING DEVICE IN A VEHICLE AND BRAKING DEVICE**
VERFAHREN UND VORRICHTUNG ZUR STEUERUNG EINER BREMSVORRICHTUNG IN EINEM FAHRZEUG UND BREMSVORRICHTUNG
PROCEDE ET APPAREIL PERMETTANT DE COMMANDER UN DISPOSITIF DE FREINAGE D'UN VEHICULE ET DISPOSITIF DE FREINAGE

(43) Date of publication of application: 26.04.2006
(73) Proprietor: Freni Brembo S.p.A., 24035 Curno (IT)
(72) Inventor: CANTONI, Carlo, I-24020 Gorle (IT); CARRARA, Marco, I-20062 Cassano D'Adda (IT); SZEWCZYK, Beniamin, I-24044 Dalmine (IT)
(74) Representative: Crippa, Paolo Ernesto
(86) International application number: PCT/IT2003/000485
(87) International publication number: WO 2005/012756

(56) References cited:
- WO-A-03/035445
- US-A- 6 003 640
- US-B1- 6 279 694
- US-B1- 6 536 562

## Description

. The subject of the invention is a braking device of a vehicle.

More particularly, the invention relates to the field of disc brakes of the electromechanical type, that is where the braking device comprises a disc caused to rotate with a wheel of the vehicle, a caliper provided with pads and associated with a fixed part of the vehicle and at least one piston housed in the caliper and connected operationally to an electric motor to interact with at least one of the pads and press it against a surface of the disc.

As is known, the braking force, that is to say the force which is exerted when, as a result of operation of the electric motor, the piston, pads and discs are packed together side by side relative to each other, depends on the value of the piston travel. In the previous part of the stroke, that is the part in which the clearances between the piston, pads and discs are taken up, the braking force is substantially null even when the piston travel is altered.

In the industry, there is consequently a keenly felt requirement to ascertain the position of the piston inside the caliper and to determine a starting or zero position, to ascertain the travel required to apply a specified braking force.

The purpose of the invention is to devise and make available a braking device of a vehicle enabling the above-mentioned requirement to be met.
A device of this type is known from WO 03/035445 A, according to the preamble of claim 1.

This purpose is also achieved by means of a braking device according to claim 1

Other characteristics and advantages of the braking device according to the invention will become clear from the following description which is given of preferred embodiments, provided purely by way of non-limiting examples, with reference to the appended drawings in which:
- figure 1 shows a view in section of a braking device comprising a controlling apparatus according to the invention;
- figure 2 shows an enlarged detail of figure 1 in a possible variant embodiment;
- figure 3 shows a view in section of a variant embodiment of the braking device in figure 1;
- figure 4 shows an enlarged detail of figure 1 in a possible variant embodiment;
- figure 5 shows an enlarged detail of figure 1 in a possible variant embodiment.

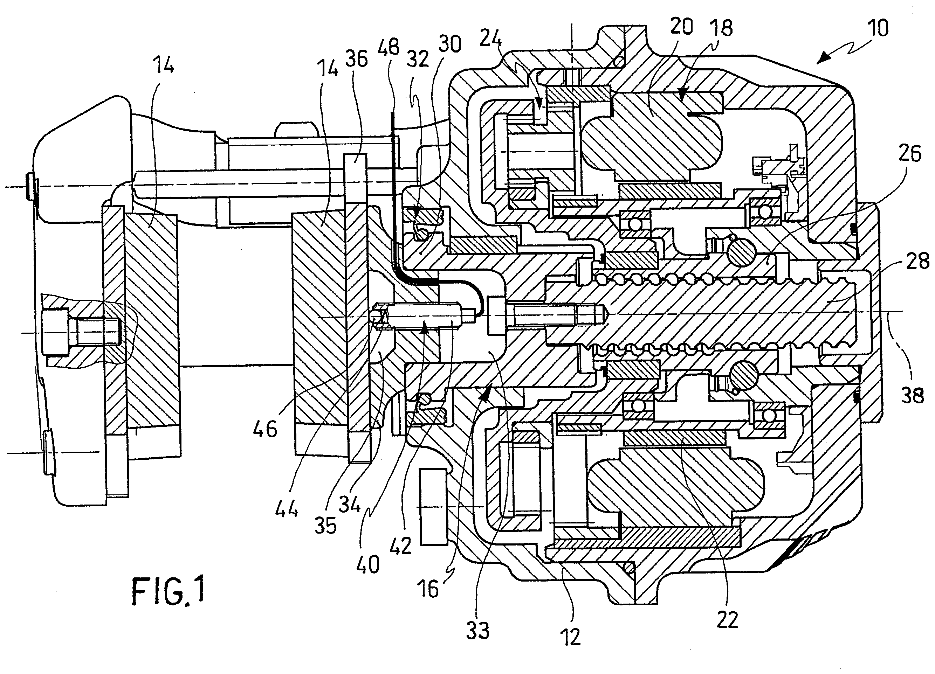

With reference to the above drawings, and in particular with reference to figure 1, a braking device 10 of a vehicle is shown.

The braking device 10 comprises a disc, not shown, caused to rotate with a wheel of the vehicle, and a caliper 12 provided with pads 14. The caliper 12 shown in figure 1 is capable of being associated with a sliding disc.

The caliper 12 is generally associated with a fixed part of the vehicle arid houses at least one piston 16 operationally connected to an electric motor 18 to interact with at least one of the pads and press it against a surface of the disc.

To simplify the description, in what follows the terms advance or moving closer of the piston will be used to indicate the movement from right to left of the piston with reference to figure 1, that is the movement which tends to clamp the pads against the surfaces of the disc and apply the braking force. Similarly, the terms retraction or moving away of the piston will be used to indicate the movement from left to right of the piston with reference to figure 1, that is the movement which tends to release the pads relative to the disc and to reduce or cancel the braking force.

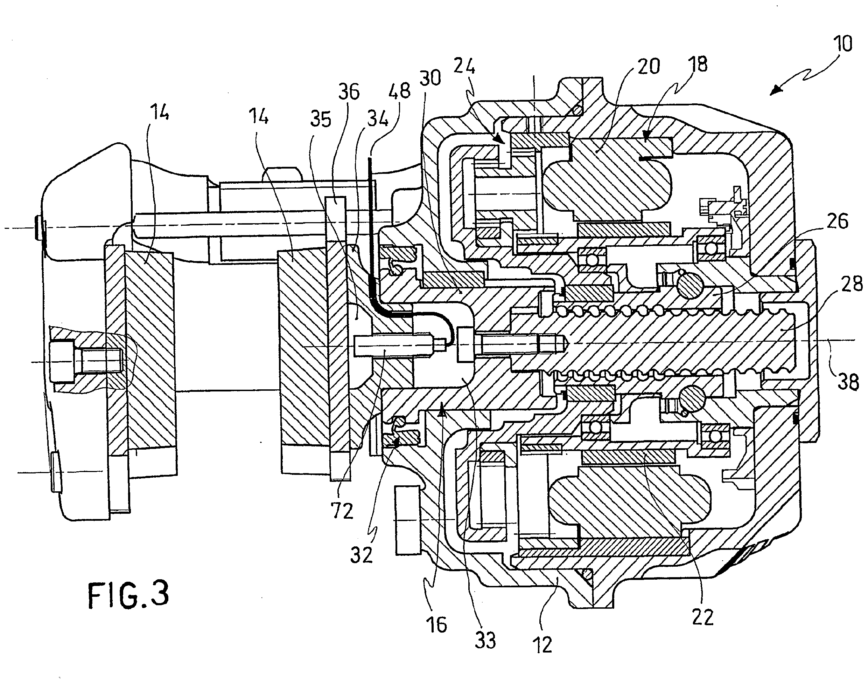

According to a possible form of embodiment, for example illustrated in figure 1 or 3, the electric motor 18 comprises a stator 20 and a rotor 22 housed inside the body of the caliper 12, in such a way that one is located inside the other. Moreover, reduction means 24 are provided capable of transmitting the rotational motion from the rotor 22 to a nut 26. The latter is coupled with a screw 28 associated with the piston 16 to convert the rotary motion of the nut 26 into translational motion of the piston 16.

According to a possible form of embodiment, the piston 16 comprises a main component 30 connected, for example by means of a threaded connection, to the screw 28. An outer edge of the main component 30 is preferably associated with sealing means 32. The main component 30 is for example produced in the form of a tumbler or cup which faces towards a corresponding pad 14. According to the invention, the main component 30 forms a cavity 33.

The number 34 is used to indicate a head component of the piston 16, partly fitting inside the main component 30. One end of the head component 34 is capable of being inserted inside the main component 30 or, more particularly, partly inside the cavity 33. The head component 34 is capable of interacting with the corresponding pad 14 or, more precisely, with a plate 36 of the corresponding pad 14. The head component 34 is produced in the form of a tumbler or cup which faces towards the corresponding pad. According to the invention, the head component 34 incorporates a cavity 35. According to a possible form of embodiment, the transverse dimensions of the head component 34, at the point at which it is capable of coming into contact with the corresponding pad, are greater than those of the main component 30 so as to form a large contact area.

According to the example shown in the drawing, the screw 28 and the piston 16 (main component 30 and head component 34) are arranged along a longitudinal axis 38.

According to the invention, an apparatus is provided for controlling the braking device 10 comprising means for detecting the relative position between the piston 16 and the pad 14 with which the piston interacts and means for adjusting the position of the piston 16 relative to that of the corresponding pad, thus defining an initial or zero position of the piston.

In more detail, the detecting means are capable of detecting a predetermined relative position between the piston 16 and the corresponding pad. According to a possible form of embodiment, the above-mentioned predetermined position corresponds to the side by side or contact position between the piston 16, and in particular the head component 34, and the corresponding pad 14. According to a different form of embodiment, the above-mentioned predetermined position corresponds to a predetermined distance between the piston 16, and in particular the head component 34, and the corresponding pad 14. This distance is preferably equal to about 1.8 mm.

Advantageously, means may be provided for operating the piston 16 with no load at least once until the pads 14, disc and piston 16 are packed together side by side, and means for moving the piston 16 away from the corresponding pad 14, separating the piston, the pads and the disc. According to a possible form of embodiment, the means for operating the piston 14 with no load and the means for moving this piston 14 away are capable of being operated at least when starting the vehicle.

According to the invention, the means for detecting the relative position between the piston 16 and the pad 14 with which it interacts are also capable of repeating the position detection process during normal operation of the vehicle.

According to the invention, the means for detecting the relative position between the piston 16 and the pad 14 with which it interacts comprise a sensor capable of being fitted to the piston 16, preferably to the head component 34 of the piston 16. Still more advantageously, the sensor is capable of being fitted coaxially with the piston 16, that is along the longitudinal axis 38. In other words, the sensor is capable of being fitted centrally relative to the piston and the corresponding pad.

. According to the invention, the sensors is fitted inside the cavity 33 in the main component 30 of the piston 16, so as to extend into the cavity 35 in the head component 34.

The appended drawings correspond to some possible forms of embodiment of the above-mentioned sensor.

In figure 1, the number 40 is used to indicate the sensor, as previously described, capable of coming into contact with the corresponding pad 14, or more precisely with the plate 36 of the corresponding pad 14, and of detecting this contact. According to a possible form of embodiment, the sensor 40 comprises a housing 42 having a cylindrical seating into which a spring 44 is inserted and, projecting from one end, a ball 46. A connecting wire 48 passes through the head component 34 and leads away from the braking device 10.

The ball 46 constitutes a moving part which, because of the contact with the pad or the separation from it, is capable of changing the state of an electrical circuit as a result of this movement, generating a corresponding signal. This signal is thus an indication of the fact that the piston is located in a predetermined position relative to the pad, and in particular that it is in contact with it or that it has just separated from it. Depending on the position of the sensor relative to the piston, and in particular relative to the head component, the sensor may detect the actual contact (or separation) between the piston and the pad or a predetermined distance between them.

According to a possible form of embodiment, the sensor 40 is capable of detecting both contact with the pad when the piston moves closer and separation from the pad when the piston moves away.

The housing 42 is threaded externally to be fitted into a seating in the head component 34. Moreover, the distance between the ball 46 and the pad may be adjusted by adjusting the position of the housing 42 of the sensor.

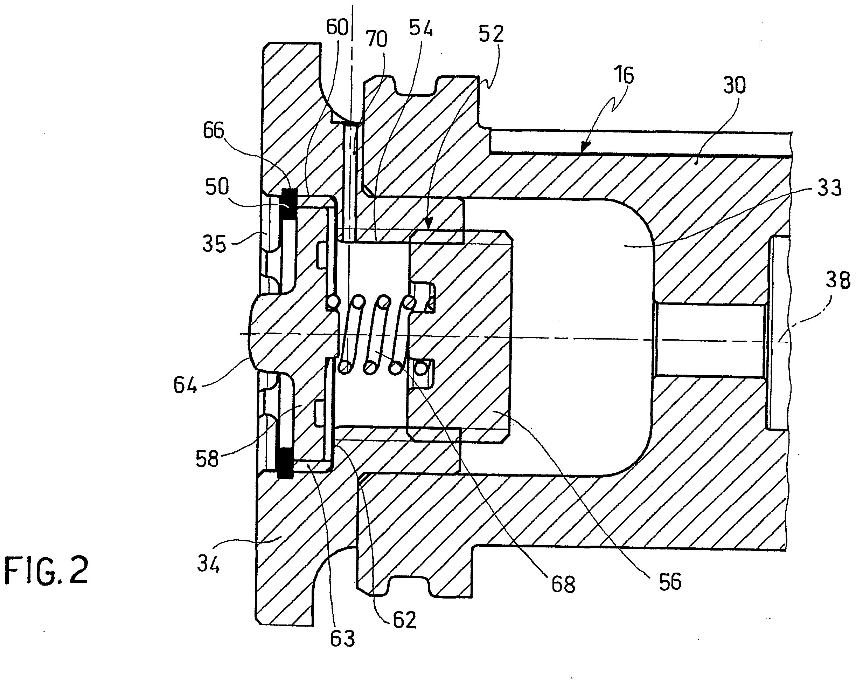

According to a further form of embodiment, the moving part of the sensor is capable of being fitted directly to the piston 16 or to the head component 34 of the piston, held by retaining means 50. In other words, the casing 42 in figure 1 is not provided. An example of this form of embodiment is shown in figure 2, in which the number 52 indicates the sensor as a whole.

The head component 34 has a threaded seating 54 into which is screwed a stop plug 56. The stop plug 56 may be produced from electrically insulating material.

The moving part of the sensor, produced for example from electrically conducting material, is indicated by the number 58 and is housed in a seating 60 in the head component 34 of the piston 16. The seating 60 has transverse dimensions preferably greater than those of the threaded seating 54 so as to constitute shoulders 62 for the moving part 58. A bush 63 is fitted into the seating 60 to receive the moving part 58 and is produced for example from electrically insulating material.

The head component 34 is produced from an electrically conducting material.

Advantageously, the moving part 58 comprises a small plate provided with a protuberance 64 capable of projecting from the space occupied by the piston 16 or the head component 34 of the piston, towards the corresponding pad 14.

The retaining means 50 are embodied for example by means of a circlip or Seeger ring housed in an annular groove 66 in the head component 34. The circlip or Seeger ring is produced from conducting material.

Between the moving part 58 and the stop plug 56, spring means are inserted, for example in the form of a helical spring 68. The spring means may be such as to be electrically conducting. Preferably the spring means press the moving part 58 towards the corresponding pad, leaving a specified distance between the moving part 58 and the shoulders 62. According to a possible form of embodiment, the protuberance 64 extends along the longitudinal axis 38 so as to project from the space occupied by the piston.

Finally, the head component 34 has a channel 70 to house a wire similar to that in figure 1, not shown. The wire may be connected directly to the moving part 58 so as to detect the distance of the latter from the circlip or Seeger ring and therefore the opening of the electrical circuit.

As a result of the contact with the pad as the piston advances, the moving part 58 is moved closer to the shoulders 62, becoming separated from the circlip or Seeger ring against the force exerted by the spring 68. This movement changes the state of an electrical circuit (opening it), generating a corresponding signal indicating that contact has occurred between the piston and the pad. Alternatively, as a result of separation from the pad as the piston moves away or retracts, the moving part 58 is pressed by the spring 68 towards the outside of the piston (to the left in figure 2). This movement alters the state of an electrical circuit (closing it), generating a corresponding signal indicating that separation has occurred between the piston and the pad.

According to a further form of embodiment, a sensor of the inductive type is provided, indicated by the reference number 72. An example of this form of embodiment is shown in figure 3.

According to a further form of embodiment, the means for detecting the relative position between the piston 16 and the pad 14 with which it interacts comprise a sensor of the Hall type, indicated by the reference number 74.

Hall sensors are sensors integrated with a magnet and capable of detecting the moving closer of a ferromagnetic element which closes the magnetic flux with the magnet.

According to a possible form of embodiment, the Hall sensor 74 is in particular capable of detecting a predetermined distance between the pad and the piston. Preferably the above-mentioned predetermined distance is equal to about 1.8 mm.

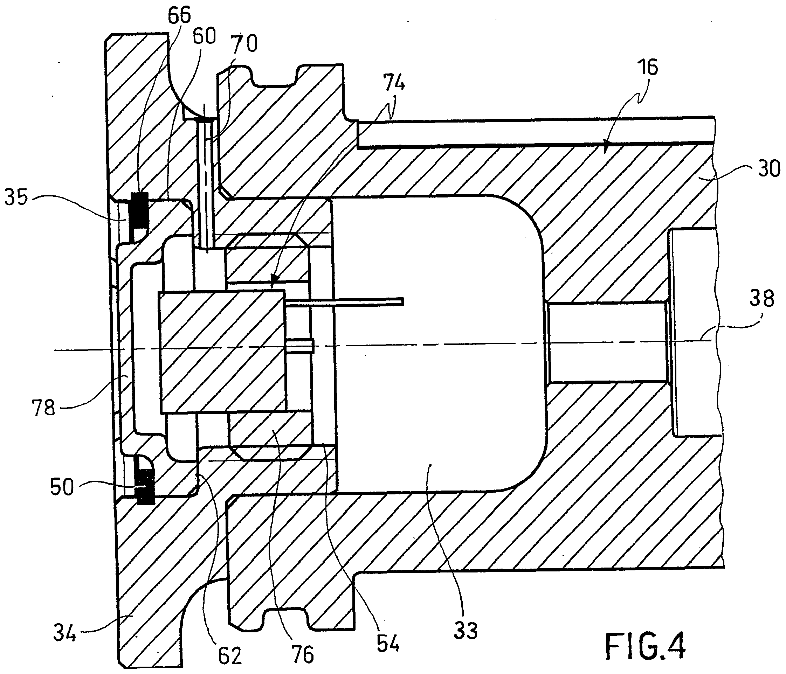

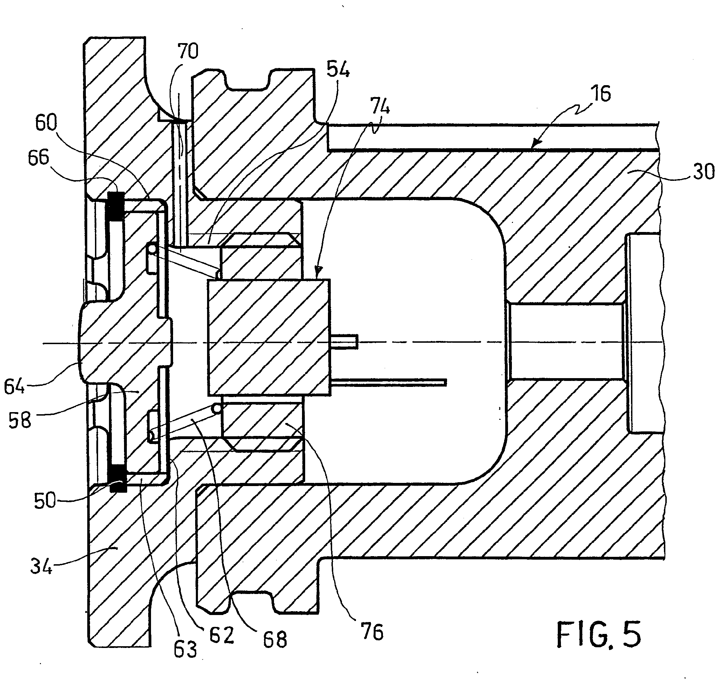

Advantageously, the sensor 74 is capable of being fitted to the piston 16, or more preferably to the head component 30, so that it is possible to vary the distance between the piston 16 and the corresponding pad 14 which is detected by the sensor. In a possible form of embodiment shown in figure 4 and also in figure 5, the sensor 74 can be fitted to the head component 34 in a position which is adjustable in a direction parallel to the longitudinal axis 38, for example by means of a threaded collar 76.

Figure 4 shows a possible form of embodiment using a Hall sensor. The head component 34 has the threaded seating 54 into which is screwed the threaded collar 76. Advantageously, the form of the head component 34 of the piston 16 is similar to that in figure 2 and has a seating 60 with transverse dimensions preferably greater than those of the threaded seating 54 so as to constitute shoulders 62.

The form of embodiment in figure 4 utilises the fact that the pad comprises a plate generally produced from ferromagnetic material. A cover 78 of non-ferromagnetic material may be provided, capable of being fitted to the piston 16, or more preferably to the seating 60 of the head component 34, between the sensor and the plate.

The cover 78 is held by the retaining means 50, for example embodied by means of a circlip and or Seeger ring housed in the annular groove 66 in the head component 34.

Moreover the head component 34 has the channel 70 to house a wire similar to that in figure 1, not shown.

Depending on the position of the sensor 74 along the longitudinal axis 38, it is possible to define the predetermined relative position between the piston and pad at which the sensor operates. This is because the latter detects the closing or opening of a magnetic flux between the plate 36 and the sensor during the process respectively of advance or retraction of the piston. The cover 78 optionally represents an element protecting the sensor.

According to a possible further form of embodiment, for example shown in figure 5, provision is made for the moving part 58 produced from ferromagnetic material. Advantageously the moving part 58 is capable of being fitted directly to the piston 16 or to the head component 34 of the piston, held by the retaining means 50.

The moving part 58 is housed in the seating 60 of the head component 34 of the piston 16. The seating 60 has transverse dimensions preferably greater than those of the threaded seating 54 so as to constitute shoulders 62 for the moving part 58. The bush 63 fitted into the seating 60 to take the moving part 58 is produced from non-ferromagnetic material.

Advantageously, the moving part 58 is produced in the form of a small plate provided with the protuberance 64 and capable of projecting from the space occupied by the piston 16 or the head component 34 of the piston, towards the corresponding pad 14.

The retaining means 50 for the moving part 58 are for example embodied by means of a circlip or Seeger ring housed in the annular groove 66 in the head component 34.

Between the moving part 58 and the threaded collar 76 spring means are inserted, for example in the form of a spring 68, by which the moving part is pressed towards the corresponding pad 14.

Preferably the spring means press the moving part 58 towards the corresponding pad, leaving a specified distance between the moving part 58 and the shoulders 62. According to a possible form of embodiment, the protuberance 64 extends along a longitudinal axis so as to project from the space occupied by the piston.

The head component 34 has a channel 70 to house a wire similar to that in figure 1, not shown.

As a result of the contact with the corresponding pad 14 as the piston 16 advances, the moving part 58 is moved closer to the shoulders 62 and can come into contact with them against the force exerted by the spring 68. This movement closes the magnetic flux between the moving part 58 and the magnet of the sensor 74, generating a corresponding signal indicating that contact has occurred. Alternatively, as a result of the separation from the corresponding pad 14 as the piston 16 moves away or retracts, the moving part 58 is pressed by the spring 68 towards the outside of the piston (to the left in figure 5). This movement opens the magnetic flux between the moving part 58 and the magnet of the sensor 74, generating a corresponding signal indicating that the separation has occurred.

After a predetermined relative position between the piston 16 and the corresponding pad 14 has been detected, the means for adjusting the position of the piston operate so as to define a starting or zero position. In general, the adjusting means may comprise the electric motor 18 and the control system for this motor, together with the software for management of the braking device 10. Depending on the form of embodiment, the means for adjusting the position of the piston are capable of stopping the retraction or advance of the piston in the position detected by the sensor which is taken as the starting or zero position. Alternatively, the means for adjusting the position of the piston may be capable of causing the piston to retract or advance further, moving it away from or closer to the pad by a predefined amount. This final position is taken as the starting or zero position for the piston of the braking device.

The means for operating the piston with no load when starting may comprise the electric motor 18 and the control system for this motor, together with the software for management of the braking device 10 which is initialised during this stage.

. More generally, an embodiment relates to a method for controlling a braking device 10 in a vehicle which advantageously comprises the steps of detecting the relative position between the piston 16 and the pad 14 with which the piston interacts and adjusting the position of the piston relative to that of the corresponding pad. The position of the piston may be adjusted either by stopping the piston in the position detected or causing it to retract or advance further by a predetermined amount.

According to a possible form of embodiment, provision is made for detecting a predetermined relative position between the piston and the corresponding pad, for example when they are in contact.

The above-mentioned embodiment may be applied both when starting the vehicle to ascertain the position of the piston relative to the pad and define a starting or zero position of the piston, and during operation of the vehicle to check the position of the piston following wear of the pads.

In the first case, that is when starting the vehicle, the piston is operated with no load at least once, causing it to advance until the pads, disc and piston are packed together side by side. Preferably three operations to pack them together side by side are carried out to take up the play between the piston, pads and disc completely. While they are being moved to their side by side positions, the electric motor 18 presses the piston to advance it, preferably at a speed lower than that normally used for braking.

Next, the piston is retracted, moving it away from the corresponding pad and separating the piston, pads and disc from each other. In this case too, the speed is preferably lower than the speed at which the piston normally retracts.

According to a possible form of embodiment, the relative position between the piston and the pad is detected during the process of retracting or moving away the piston. Advantageously, detecting may occur at separation of the piston from the pad or, when separation has occurred, when the piston is already at a specified distance from the pad.

According to a possible form of embodiment, once the position of the piston relative to the pad has been detected, the piston is stopped in this position which is taken as the starting position of the piston or as the zero position. This provision is advantageous especially in the case where a specified distance between the pad and the piston is detected. A particularly advantageous example is the case of the Hall sensor calibrated so as to detect the distance, for example of 1.8 mm, between the pad and the piston.

According to a different form of embodiment, after the position of the piston has been detected relative to the pad, this position is varied. In particular, the piston may be further moved away from or closer to the corresponding pad by a predetermined amount. The amount is predefined according to the number of revolutions made by the electric motor and by the nut, which corresponds to a specified amount of piston travel, using a control of a known type. In this case, the starting position of the piston or the zero position will be the final one after the further moving away or moving closer. Providing for the piston to be further moved away is particularly advantageous, in the case of the sensors which detect contact or immediate separation between the piston and the pad so that as a result of the further retraction, a specified clearance between the two components is created. Where appropriate, rather than moving the piston away, provision may be made for further moving it closer to the pad.

According to a further form of embodiment, after the step of operating with no load, there follows the step of retraction of the piston without detecting the relative position between the piston and the pad. It is then possible to cause the piston to advance again moving it closer to the pad and detecting the relative position between the piston and the pad as the piston moves closer. Further moving closer of the piston is also preferably carried out at a speed lower than that normally used during braking.

According to a possible form of embodiment, provision is made to detect the position at which the piston comes into contact with the corresponding pad as the piston is further moved closer, and then for the piston to be further moved away from the corresponding pad by a predetermined amount. This latter position is the starting or zero position of the piston.

According to a different form of embodiment, provision is made for detecting the position taken up by the piston at a predetermined distance from the corresponding pad as the piston further moves closer, and stopping the piston in this position. This latter position is the starting or zero position of the piston.

According to a further different form of embodiment, provision is made to detect the position taken up by the piston at a predetermined distance from the corresponding pad as the piston is further moved closer and for the piston to be further moved away from or closer to the pad by a predetermined amount. This latter position is the starting or zero position of the piston.

The above-mentioned embodiment for controlling is now briefly described with reference to some of the forms of embodiment illustrated in the drawings. When the vehicle is started, the electric motor 18 is operated and the piston 16 is made to advance, preferably at a speed lower than that normally used during braking. When all clearances have been taken up, preferably after operating the electric motor with no load three times, the motor brings back the piston causing it to retract, preferably still at a limited speed.

With reference to figure 1, it is for example possible, as the piston retracts, to detect the position of the latter when the sensor 40 separates from the corresponding pad 14. The moving away of the ball 46 from the plate 36 and the consequent expansion of the spring 44 causes a change in the state of an electrical circuit (opening/closing it) and generation of a corresponding signal. It is then possible to cause the piston to retract (or advance) further by controlling the motor using known methods, so as to achieve a specified distance from the pad which is taken as the starting or zero position of the piston.

-Still with reference to figure 1, rather than detecting the distance of the sensor from the pad as the piston retracts, the piston may be made to retract, stopped and then made to advance again, preferably at a speed lower than that normally used during braking, and the contact between the sensor and the pad detected. The ball 46 comes into contact with the plate 36 and compresses the spring 44 changing the state of an electrical circuit (opening/closing it), generating a corresponding signal. It is then possible to cause the piston to retract (or advance) again by a specified amount by operating the controls of the electric motor.

With reference to figure 2, the steps in applying the above-mentioned method are similar to those described for figure 1. As a result of operating the electric motor 18 with no load to pack together the piston, pads and disc side by side, the protuberance 64 of the moving part 58 is in contact with the plate 36 of the pad and therefore the moving part 54 is kept pressed apart from the Seeger ring, compressing the spring 68. By retracting the piston, it is possible to detect the position of the piston when the moving part 58 separates from the plate of the pad, similarly to what occurs with reference to the ball 46 in figure 1.

If detection of the position of the piston is carried out as it advances, the contact between the protuberance 64 and the plate 36 of the pad is detected as a result of which the moving part 58 is pressed, becoming separated from the circlip or Seeger ring and compressing the spring 68, similarly to what occurs with reference to the ball 46 in figure 1.

With reference to figure 4, the axial position of the sensor 74 determines the distance between the piston and the pad detected by the sensor. As already indicated previously, this distance is preferably 1.8 mm. The preferred way of application of the method described above by means of the apparatus in figure 4 provides that, as the piston retracts, the sensor detects the separation of the piston 16 from the ferromagnetic plate 36 (with opening of the magnetic flux between the plate and the magnet of the sensor) and in particular the position of the piston when it is at about 1.8 mm from the plate. Preferably the piston is halted and this position is taken as the starting or zero position. However, it is possible to provide for further retraction or advance if this should be considered necessary.

Similarly, detection may take place during the advance of the piston which is stopped as soon as the sensor detects the presence of the plate and closure of the magnetic flux. In this case too, the sensor is preferably calibrated and positioned so that the closing of the magnetic flux corresponds to a distance of about 1.8 mm between the plate and the piston. In this case too, it is possible for the piston to be further moved closer or moved away relative to the pad.

Finally, with reference to figure 5, the sensor 74 is calibrated and positioned directly on the piston 16 relative to the ferromagnetic moving part 58, so as to detect a specified distance between the piston and the pad, for example 1.8 mm. As a result of operating the electric motor with no load to pack together the piston, pads and disc side by side, the protuberance 64 of the moving part 58 is in contact with the plate 36 of the pad and therefore the moving part 58 is kept pressed apart from the circlip or Seeger ring, compressing the spring 68. By retracting the piston, it is possible to detect the position of the piston when the moving part 58 separates from the plate of the pad, opening the magnetic flux relative to the magnet of the sensor. Similarly to what has been stated previously, the starting or zero position of the piston may be that of the separation of the moving part from the plate or the position after the piston is further moved away or moved closer relative to the plate.

If detection of the position of the piston occurs as it advances, contact is detected between the protuberance 64 and the plate 36 of the pad as a result of which the moving part 58 is pressed apart from the circlip or Seeger ring, compressing the spring 68 and closing the magnetic flux with the magnet of the sensor. Similarly to what has been said previously, the starting or zero position of the piston may be that of the contact of the moving part with the plate or the position after the piston is further moved away or moved closer relative to the plate.

From the above, it can be appreciated how the apparatus and the method described above meet the above-mentioned requirement of applying a specified braking force by ascertaining a zero position of the piston.

By detecting the relative position of the piston with respect to the' corresponding pad as the piston retracts, the steps of the method are substantially simplified though a highly accurate sensor is required.

Alternatively, choosing to detect the position of the piston as it advances further does slightly complicate the procedure but enables less accurate sensors to be used.

For example, in the case of vehicles not equipped with braking or traction control, the method described above also enables the braking devices of the vehicle to be balanced, giving a uniform braking action on all the wheels.

Providing for detection of a predetermined distance of the piston from the pad further simplifies the steps of the procedure as the piston can be stopped in the detection position without further movements.

Choosing to operate with no load several times when switching on the ignition enables clearances to be taken up and choosing to operate with no load three times is particularly advantageous, and reliably corresponds to correct packing together of the piston, pads and disc side by side.

The method described above, in its various forms of embodiment, also enables the position of the piston to be checked after the vehicle ignition is switched on, that is during normal operation of the vehicle. In this way, it is particularly simple and effective to allow for wear of the pads.

The presence of a sensor inside the piston and in particular in an axial position relative to it is a particularly advantageous arrangement both in terms of a compact design and of correct readings. Moreover, it is not necessary to make drastic changes to the already known components of an electromechanical brake, all that is required being to introduce a new head component 34 though without completely altering its external shape or overall size.

A particularly advantageous arrangement is to produce a proximity sensor with a moving part directly inserted inside the piston and in particular inside the head component, consequently making the best use of the spaces and obtaining an easily adjustable sensor. Moreover, slightly altering the structure of the head component compared with those generally available on the market advantageously produces a particularly versatile head component, suitable for receiving either a proximity sensor of the mechanical type or operating by contact (figure 2) or a Hall sensor (figures 4 and 5).

Among the forms of embodiment illustrated and described, a particularly advantageous one is that which utilises the presence of a Hall sensor since it is possible to calibrate and position it to detect even very limited distances between the pad and the piston, but with extreme accuracy. In particular, the provision of a further magnetic element fitted directly to the piston simplifies adjustment of the sensor which can be carried out directly when fitting the head component 34, without the need to make reference to the plate of the pad.

It is clear that variants and/or additions may be provided to what is described and illustrated above.

The drawings show a caliper capable of cooperating with a disc of the sliding type. Provision may however be made for other types of calipers and discs, such as for example a caliper of the floating type, associated with an axially fixed disc.

A person skilled in the art will be able, for the purpose of meeting incidental and specific requirements, to make numerous changes, adaptations and replacements of components with other functionally equivalent ones, without thereby departing from the scope of the following claims.

## Claims

1. A braking device (10) of a vehicle comprising a disc caused to rotate with a wheel of the vehicle, a caliper (12) provided with pads (14) and associated with a fixed part of the vehicle, at least one piston (16) housed in said caliper (12) and connected operationally with an electric motor (18) to interact with at least one of said pads (14) and to press it against a surface of the disc, and at least one apparatus for controlling a braking device in a vehicle,
- said apparatus comprising means for detecting the relative position between the piston (16) and the pad (14) with which the piston (16) interacts and means for adjusting the position of the piston (16) relative to that of the corresponding pad (14)
- said piston (16) is capable of coming into contact with the pad (14), and
- said means for detecting comprise a sensor (40, 52, 72, 74) capable of being fitted to the piston, and said sensor (40, 52) is capable of coming into contact with a plate (36) of the corresponding pad (14) and of detecting this contact,
- said means for detecting the relative position between the piston (16) and pad (14) with which it interacts is configured for repeating the detection process both when starting the vehicle to ascertain the position of the piston (16) relative to the pad (14) and during normal operation of the vehicle to check the position of the piston (16) following wear of the pads (14);
- the piston (16) comprising a main component (30) which forms a main component cavity (33);
- the piston (16) also comprising a head component (34) produced in the form of a cup which faces towards the corresponding pad, so as to incorporate a head component cavity (35);
- the sensor is fitted inside the main component cavity (33) of the piston (16), so as to extend into the head component cavity (35) of the head component (34) of the piston (16).

2. A braking device (10) according to claim 1, in which said detecting means are capable of detecting a predetermined relative position between the piston (16) and the corresponding pad (14).

3. A braking device (10) according to claim 2, in which said predetermined position corresponds to the side by side position between the piston (16) and the corresponding pad (14).

4. A braking device (10) according to one of claims 1 to 3, in which means are provided for operating the piston (16) with no load at least once until the pads (14), disc and piston (16) are packed together side by side, and means for moving the piston (16) away from the corresponding pad (14), separating the piston (16), the pads (14) and the disc and/or in which said means for operating the piston (16) with no load and said means for moving the piston (16) away are capable of being operated at least when the vehicle is started.

5. A braking device (10) according to claim 1, in which said sensor (40, 52, 72, 74) is capable of being fitted coaxially with the piston (16).

## Patentansprüche

1. Bremsvorrichtung (10) eines Fahrzeugs, umfassend eine Scheibe, welche veranlasst wird, mit einem Rad des Fahrzeugs zu rotieren, einen Bremssattel (12), welcher mit Belegen (14) bereitgestellt ist und einem befestigten Teil des Fahrzeugs zugeordnet ist, wenigstens einen Kolben (16), welcher in dem Sattel (12) aufgenommen ist und betriebsmäßig mit einem elektrischen Motor (18) verbunden ist, um mit wenigstens einem der Beläge (14) zu interagieren und ihn gegen eine Fläche der Scheibe zu drücken, und wenigstens eine Vorrichtung zum Steuern einer Bremsvorrichtung in einem Fahrzeug,
- wobei die Vorrichtung Mittel zum Erfassen der relativen Position zwischen dem Kolben (16) und dem Belag (14), mit welchem der Kolben (16) interagiert, und Mittel zum Einstellen der Position des Kolbens (16) relativ zu derjenigen des entsprechenden Belags (14) umfasst
- wobei der Kolben (16) in der Lage ist, mit dem Belag (14) in Kontakt zu treten, und
- wobei die Mittel zum Erfassen einen Sensor (40, 52, 72, 74) umfassen, welcher in der Lage ist, an den Kolben eingepasst zu sein, und wobei der Sensor (40, 52) in der Lage ist, mit einer Platte (36) des entsprechenden Belags (14) in Kontakt zu treten und diesen Kontakt zu erfassen,
- wobei die Mittel zum Erfassen der relativen Position zwischen dem Kolben (16) und dem Belag (14), mit welchem er interagiert, dazu eingerichtet sind, den Erfassungsvorgang sowohl zu wiederholen, wenn das Fahrzeug gestartet wird, um die Position des Kolbens (16) relativ zu dem Belag (14) sicherzustellen, als auch während eines normalen Betriebs des Fahrzeugs, um die Position des Kolbens (16) infolge einer Abnutzung der Beläge (14) zu überprüfen;
- wobei der Kolben (16) eine Hauptkomponente (30) umfasst, welche einen Hauptkomponentenhohlraum (33) bildet;
- wobei der Kolben (16) auch eine Kopfkomponente (34) umfasst, welche in der Form einer Schale hergestellt ist, welche in Richtung des entsprechenden Belags weist, um einen Kopfkomponentenhohlraum (35) zu bilden;
- wobei der Sensor innerhalb des Hauptkomponentenhohlraums (33) des Kolbens (16) eingepasst ist, um sich in den Kopfkomponentenhohlraum (35) der Kopfkomponente (34) des Kolbens (16) zu erstrecken.

2. Bremsvorrichtung (10) nach Anspruch 1, wobei die Erfassungsmittel in der Lage sind, eine vorbestimmte relative Position zwischen dem Kolben (16) und dem entsprechenden Belag (14) zu erfassen.

3. Bremsvorrichtung (10) nach Anspruch 2, wobei die vorbestimmte Position der Position Seite an Seite zwischen dem Kolben (16) und dem entsprechenden Belag (14) entspricht.

4. Bremsvorrichtung (10) nach einem der Ansprüche 1 bis 3, wobei Mittel zum Betreiben des Kolbens (16) ohne Last bereitgestellt sind, wenigstens einmal bis die Beläge (14), die Scheibe und der Kolben (16) zusammen Seite an Seite gepackt sind, und Mittel zum Bewegen des Kolbens (16) von dem entsprechenden Belag (14) weg, zum Trennen des Kolbens (16), der Beläge (14) und der Scheibe bereitgestellt sind, und/oder wobei die Mittel zum Betreiben des Kolbens (16) mit keiner Last und die Mittel zum Bewegen des Kolbens (16) weg in der Lage sind, wenigstens betrieben zu werden, wenn das Fahrzeug gestartet wird.

5. Bremsvorrichtung (10) nach Anspruch 1, wobei der Sensor (40, 52, 72, 74) in der Lage ist, koaxial mit dem Kolben (16) eingepasst zu werden.

## Revendications

1. Dispositif de freinage (10) d'un véhicule comprenant un disque amené à tourner avec une roue du véhicule, un étrier (12) doté de plaquettes (14) et associé à une partie fixe du véhicule, au moins un piston (16) logé dans ledit étrier (12) et relié fonctionnellement à un moteur électrique (18) pour interagir avec au moins une desdites plaquettes (14) et pour la presser contre une surface du disque, et au moins un appareil de commande d'un dispositif de freinage dans un véhicule,
- ledit appareil comprenant des moyens de détection de la position relative entre le piston (16) et la plaquette (14) avec laquelle le piston (16) interagit et des moyens de réglage de la position du piston (16) par rapport à celle de la plaquette correspondante (14)
- ledit piston (16) étant capable de venir en contact avec la plaquette (14), et
- lesdits moyens de détection comprenant un capteur (40, 52, 72, 74) capable d'être adapté au piston, et ledit capteur (40, 52) étant capable de venir en contact avec une plaque (36) de la plaquette correspondante (14) et de détecter ce contact,
- lesdits moyens de détection de la position relative entre le piston (16) et la plaquette (14) avec laquelle il interagit étant configurés pour répéter le procédé de détection à la fois lors du démarrage du véhicule pour établir la position du piston (16) par rapport à la plaquette (14) et pendant le fonctionnement normal du véhicule pour contrôler la position du piston (16) après l'usure des plaquettes (14) ;
- le piston (16) comprenant un composant principal (30) qui forme une cavité de composant principal (33) ;
- le piston (16) comprenant aussi un composant de tête (34) produit sous la forme d'un gobelet qui fait face à la plaquette correspondante, de façon à intégrer une cavité de composant de tête (35) ;
- le capteur étant adapté à l'intérieur de la cavité de composant principal (33) du piston (16), de façon à s'étendre dans la cavité de composant de tête (35) du composant de tête (34) du piston (16).

2. Dispositif de freinage (10) selon la revendication 1, dans lequel lesdits moyens de détection sont capables de détecter une position relative prédéterminée entre le piston (16) et la plaquette correspondante (14).

3. Dispositif de freinage (10) selon la revendication 2, dans lequel ladite position prédéterminée correspond à la position côte à côte entre le piston (16) et la plaquette correspondante (14).

4. Dispositif de freinage (10) selon une des revendications 1 à 3, dans lequel sont prévus des moyens pour faire fonctionner au moins une fois le piston (16) sans charge jusqu'à ce que les plaquettes (14), le disque et le piston (16) soient rassemblés ensemble côte à côte, et des moyens d'éloignement du piston (16) de la plaquette correspondante (14), séparant le piston (16), les plaquettes (14) et le disque et/ou dans lequel lesdits moyens pour faire fonctionner le piston (16) sans charge et lesdits moyens d'éloignement du piston (16) sont capables d'être actionnés au moins lorsque le véhicule est démarré.

5. Dispositif de freinage (10) selon la revendication 1, dans lequel ledit capteur (40, 52, 72, 74) est capable d'être adapté coaxialement avec le piston (16).
